# EUROPÄISCHE PATENTANMELDUNG

(11) **EP 3 339 256 A1**
(43) Veröffentlichungstag der Anmeldung: **27.06.2018**
(21) Anmeldenummer: 16206682.3
(22) Anmeldetag: 23.12.2016
(51) Int. Cl.: C03B 19/06, C03C 3/06, C03B 20/00

(54) **VERFAHREN ZUR HERSTELLUNG VON OPAKEM QUARZGLAS, UND ROHLING AUS DEM OPAKEN QUARZGLAS**

(71) Anmelder: Heraeus Quarzglas GmbH & Co. KG, 63450 Hanau (DE)
(72) Erfinder: SCHENK, Christian, 55218 Ingelheim (DE); SCHEICH, Gerrit, 63500 Seligenstadt (DE); TSCHOLITSCH, Nadine, 63457 Hanau (DE)
(74) Vertreter: Staudt, Armin Walter

(57) **Zusammenfassung**

Bei einem bekannten Verfahren zur Herstellung von opakem Quarzglas wird aus einem feinteilige, amorphe SiO₂-Teilchen und grobteilige SiO₂-Armierungskörper enthaltenden Schlicker ein Grünkörper erzeugt und dieser durch eine Sinter-Behandlung zu einem Rohling aus dem opaken Quarzglas gesintert. Die Armierungskörper mit einer spezifischen Dichte D_{K1} sind dabei in einer SiO₂-Matrix mit einer spezifischen Glasdichte D_{M} eingebettet. Um hiervon ausgehend einen wenig rissanfälligen Rohling aus opakem Quarzglas bereitzustellen, das auch bei geringen Wandstärken eine homogene Transmission aufweist, wird erfindungsgemäß vorgeschlagen, dass sinterfähige Armierungskörper eingesetzt werden, deren spezifische Dichte D_{K0} vor der Sinter-Behandlung geringer ist als die spezifische Glasdichte D_{M}, und die infolge der Sinter-Behandlung die spezifische Dichte D_{K1} erreichen, die von der spezifischen Glasdichte D_{M} um weniger als 10% abweicht.

## Beschreibung

### Technischer Hintergrund

Die Erfindung betrifft ein Verfahren zur Herstellung von opakem Quarzglas, indem aus einem feinteilige, amorphe SiO₂-Teilchen und grobteilige SiO₂-Armierungskörper enthaltenden Schlicker ein Grünkörper erzeugt und dieser durch eine Sinter-Behandlung zu einem Rohling aus dem opaken Quarzglas gesintert wird.

Außerdem geht es in der Erfindung um einen Rohling aus opakem Quarzglas, bei dem SiO₂-Armierungskörper in einer Matrix aus porösem SiO₂ mit einer spezifischen Glasdichte D_{M} eingebettet sind.

### Stand der Technik

Ein Verfahren zur Herstellung eines opaken, geschlossenporigen Werkstoffs aus opakem Quarzglas ist aus der DE 43 38 807 C1 zu entnehmen. Dafür wird natürlich vorkommender Quarz-Rohstoff gereinigt, durch Elektroschmelzen zu Quarzglas erschmolzen und das Quarzglas anschließend zu feinen SiO₂-Teilchen mit einer Reinheit von mehr als 99,99 % SiO₂ zermahlen. Diese SiO₂-Körnung hat eine Korngrößenverteilung, bei der 80 % der Teilchen eine Größe im Bereich von 355 bis 2000 µm haben, 19% kleiner als 355 µm und 1 % größer als 2000 µm sind. Diese SiO₂-Körnung wird in deionisiertem Wasser 240 h lang unter Einsatz von Mahlkugeln aus Quarzglas durch Nassmahlen weiter zerkleinert. Nach dem Nassmahlen liegt die Korngröße im Bereich zwischen 0,45 µm und 50 µm, wobei etwa 60 % der SiO₂-Teilchen eine Größe im Bereich von 1 µm bis 10 µm haben. Die so erzeugte Dispersion - auch als "Schlicker" bezeichnet - hat einen Feststoffanteil von etwa 78 % und wird in eine Gipsform gegossen, zu einem Grünkörper getrocknet und der Grünkörper durch Sintern bei einer Temperatur von 1400 °C während einer Haltedauer von 60 min zu dem geschlossenporigen Bauteil aus opakem Quarzglas verdichtet.

Der erhaltene opake Quarzglas-Werkstoff hat eine Porosität im Bereich von 0,5 bis 2,5 %, wobei mindestens 80 % der Poren eine Porengröße von weniger als 20 µm, vorzugsweise weniger als 10 µm, aufweisen. Er zeichnet sich durch eine hohe chemische Reinheit von mindestens 99,9 % SiO₂, eine Dichte im Bereich von mindestens 2,15 und bevorzugt bis 2,18 g/cm³ und - aufgrund seiner Opazität - durch eine geringe spektrale Transmission aus. Diese definiert den Anteil der aus dem Bauteil austretenden Lichtintensität einer bestimmten Wellenlänge in Bezug auf die eingestrahlte Lichtintensität (ohne Berücksichtigung der bei der Lichtdurchdringung auftretenden Verluste durch Oberflächenreflexionen). Die spektrale Transmission liegt im Wellenlängenbereich von 190 nm bis 2650 nm unterhalb von 10% auf praktisch konstantem Niveau.

Bauteile aus diesem opaken Quarzglas eignen sich daher insbesondere zur Wärmedämmung bei hohen Temperaturen, und sie zeigen außerdem die auch sonst für Quarzglas charakteristischen und vorteilhaften Eigenschaften, wie einen niedrigen thermischen Ausdehnungskoeffizienten, eine hohe Temperaturstabilität sowie eine gute chemische Beständigkeit gegenüber vielen Prozessmedien. Daher werden derartige Bauteile seit vielen Jahren insbesondere in der Halbleiterfertigung zur Prozessierung von Halbleiterkomponenten und zur Optimierung des Wärmemanagements in Prozesskammern eingesetzt. Die Bauteile haben dabei typischerweise die Form von Reaktoren, Apparaturen, Trägerhorden, Glocken, Tiegeln, Schutzschilden oder einfachen Quarzglas-Bauteilen, wie Rohren, Stäben, Platten, Flanschen, Ringen oder Blöcken.

Beim Schlickergießverfahren ergeben sich jedoch grundsätzlich Probleme infolge der Schwindung des Grünkörpers beim Trocknen und beim Sintern. Insbesondere können Schwindungs- und Sinterrisse entstehen. Diese sind bei niedrigen Sintertemperaturen nicht zu beseitigen, sondern nur durch ein vollständiges Aufschmelzen des Glases, was aber einen Verlust an Opazität des Quarzglases bedeuten würde. Beim Entformen des Grünkörpers wirken zwangsläufig Kräfte auf diesen ein, die wegen der geringen Plastizität bereits zu Rissbildung führen können.

Diese Problematik nimmt mit zunehmender Bauteilgröße zu. Dies betrifft insbesondere die Entstehung von Schwindungsrissen. Wegen der Opazität des gesinterten Bauteils können mittels üblicher Durchleuchtungsmethoden jedoch nur oberflächennahe Materialfehler festgestellt werden. Für eine Detektion und Lokalisierung der besonders kritischen Risse im Volumen des opaken Bauteils sind aufwändige Untersuchungsmethoden erforderlich, zum Beispiel Ultraschall-Untersuchungsmethoden, die jedoch auch nicht immerzu verlässlichen Ergebnissen führen.

Letztlich können auch aufwändige Untersuchungsmethoden nicht verhindern, dass rissbehaftete Bauteile unbrauchbar sind und in der Regel Materialausschuss darstellen, der gerade bei großen Quarzglas-Bauteilen und dem mit ihrer Herstellung verbundenen Zeit- und Materialaufwand hohe Kosten verursacht. Oberflächennahe Risse können durch mechanische Nachbearbeitung zwar entfernt werden, was jedoch ein ausreichendes Übermaß vor der Bearbeitung voraussetzt.

Mit dem Rissbildungsproblem befasst sich die DE 10 2006 052 512 A1, aus der ein Verfahren und ein Rohling der eingangs genannten Gattung bekannt sind. Darin wird eine Armierung des opaken Quarzglases mit Quarzglasfasern vorgeschlagen. Zur Herstellung des armierten porösen Quarzglases wird von dem aus DE 43 38 807 C1 bekannten Schlicker aus amorphen, fein gemahlenen SiO₂-Teilchen ausgegangen und diesem ein Zuschlag in Form von Quarzglasfasern mit einem Gewichtsanteil von 4 % zugemischt. Bei den Quarzglasfasern handelt es sich um Vollfasern aus hochreinem Quarzglas mit einem Außendurchmesser um 14 µm und einer mittleren Länge um 20 mm. Im Vergleich zu den anderen, durch Mahlung erzeugten, feinteiligen SiO₂-Teilchen im Schlicker, die eine Teilchengrößenverteilung zeigen, die durch einen D₅₀-Wert von etwa 8 µm und durch einen D₉₀-Wert von etwa 40 µm gekennzeichnet ist, stellen die Quarzglasfasern im Grünkörper grobteilige Teilchen dar.

Aufgrund ihrer Dichte und Größe stabilisieren die Quarzglas-Fasern den Grünkörper und sie verringern die Trocken- und Sinterschrumpfung. Die Grünkörper-Grundmasse und der Zuschlagstoff bestehen aus amorphem SiO₂ und haben ähnliche physikalische und chemische Eigenschaften, was die Ausbildung von Spannungen beim Trocknen und Sintern des Grünkörpers vermeidet und zu dessen mechanischer Stabilität bereits im Nass- und im Grünkörper-Zustand wesentlich beiträgt. Die Rissbildung kann dadurch reduziert und die Handhabung des Grünkörpers erleichtert werden.

Nach einem Formgießen des Schlickers sowie Trocknen und Sintern des Grünkörpers wird ein Quarzglas-Rohling erhalten, in dem die ehemaligen fein gemahlenen amorphen SiO₂-Teilchen eine opake Quarzglas-Matrix bilden, in der die Quarzglas-Fasern als glasige Bereiche eingebettet sind.

### Technische Aufgabenstellung

Der Anteil glasiger Teilchen in der opaken Quarzglasmatrix vermindert zwar die Rissbildung, beeinflusst aber auch die Transmissionseigenschaften des Werkstoffs. Mit Quarzglasfasern belegte Volumenbereiche sind transparenter als Bereiche der porösen Matrix. Der Opazitätsunterschied macht sich besonders bei geringen Wandstärken als lokale, nicht exakt reproduzierbare Inhomogenität der Transmission bemerkbar und ist für manche Anwendungen des Werkstoffs unerwünscht.

Der Erfindung liegt daher die Aufgabe zugrunde, einen wenig rissanfälligen Rohling aus opakem Quarzglas bereitzustellen, das auch bei geringen Wandstärken eine homogene Transmission aufweist. Außerdem liegt der Erfindung die Aufgabe zugrunde, ein Verfahren anzugeben, das die Herstellung des opaken Quarzglases nach der Schlickermethode ermöglicht.

### Zusammenfassung der Erfindung

Hinsichtlich des Verfahrens wird diese Aufgabe ausgehend von einem Verfahren der eingangs genannten Gattung erfindungsgemäß dadurch gelöst, dass sinterfähige Armierungskörper eingesetzt werden, deren spezifische Dichte D_{K0} vor der Sinter-Behandlung geringer ist als die spezifische Glasdichte D_{M} und die infolge der Sinter-Behandlung die spezifische Dichte D_{K0} erreichen, die von der spezifischen Glasdichte D_{M} um weniger als 10% abweicht.

Die Armierung bewirkt eine mechanische Stabilisierung des Grünkörpers und sie vermindert die Schwindung beim Trocknen und Sintern. Sie erleichtert die Herstellung endkonturnaher Rohlinge. Im Unterschied zum gattungsgemäßen Verfahren wird der Schlicker mit sinterfähigen Armierungskörpern aus porösem SiO₂ versetzt. Die sinterfähigen Armierungskörper werden erst bei der anschließenden Sinter-Behandlung des Grünkörpers zusammen mit der Grünkörpermatrix thermisch weiter verdichtet und zwar so, dass ihre Dichte D_{K1} der Glasdichte D_{M} der Matrix im Idealfall genau entspricht, aber maximal um 10 % davon nach oben oder unten abweicht. Bezugsgröße für den Prozentwert ist dabei die Glasdichte D_{M}.

Die spezifische Glasdichte D_{M} ist diejenige mittlere Dichte, die das opake Quarzglas laut Spezifikation haben soll, beispielsweise laut Spezifikation oder aufgrund einer anderen Vorgabe, und zwar unabhängig davon, ob SiO₂-Armierungskörper darin enthalten sind oder nicht. Sie liegt typischerweise im Bereich zwischen 2,10 und 2,18 g/cm³, aber vorzugsweise mindestens 2,15 g/cm³ und sie bestimmt maßgeblich das Transmissionsverhalten des opaken Quarzglases.

Dadurch, dass die spezifische Dichte D_{K0} der SiO₂-Armierungskörper vor dieser Sinter-Behandlung geringer ist als die spezifische Glasdichte, nähert sich die spezifische Dichte D_{K} der SiO₂-Armierungskörper beim Sintern des Grünkörpers der spezifischen Glasdichte D_{M} an.

Die SiO₂-Armierungskörper sollen die Rissbildungsgefahr im Grünkörper verringern aber durch ihre Anwesenheit sollen sich die spezifische Dichte und die optischen Eigenschaften des opaken Quarzglases möglichst wenig ändern. Daher werden SiO₂-Armierungskörper eingesetzt, deren Porosität vorab so eingestellt ist, dass sie nach der Sinterbehandlung eine spezifische Dichte haben, die von der nominalen spezifischen Glasdichte um weniger als +/- 10%, vorzugsweise um weniger als +/- 5% abweicht. Im Idealfall beeinflussen die SiO₂-Armierungskörper die spezifische Dichte des Komposits nicht, das heißt, die Armierungskörper haben nach der Sinterbehandlung des Grünkörpers dieselbe Dichte wie das opake Quarzglas der Matrix.

Ergebnis ist porenhaltiges, opakes Quarzglas mit einer Matrix aus porösem SiO₂, in der Armierungskörper aus ebenfalls porösem SiO₂ verteilt sind, wobei sich die die beiden SiO₂-Phasen (Matrix / Armierungskörper) hinsichtlich ihrer Dichten D_{K1}, D_{M} und damit auch hinsichtlich ihres Transmissionsverhaltens nicht oder möglichst wenig unterscheiden.

Beim Grünkörper handelt es sich um einen Vollkörper, um einen Hohlkörper oder um eine Schicht auf einem Basiskörper. Der Grünkörper wird in der Regel durch Ausgießen des Schlickers in eine Form erhalten. Es sind aber auch andere Verarbeitungsmethoden geeignet, wie etwa Einsaugen in eine Form, Tauchen, Spritzen, Aufstreichen, Aufspachteln, Abziehen, Aufziehen, Aufrakeln und dergleichen.

Die Intensität der Sinterbehandlung wird durch deren Temperatur- und Zeitprofil bestimmt, vereinfacht ausgedrückt, durch die "Sintertemperatur" und die "Sinterdauer". Die amorphen SiO₂-Teilchen und die SiO₂-Armierungskörper unterliegen vereint im Grünkörper derselben Sinterbehandlung, sie unterscheiden sich aber in ihrer Sinteraktivität. Die Sinteraktivität wird bei den amorphen SiO₂-Teilchen maßgeblich von deren Teilchengröße, der Teilchendichte (Gründichte) und Teilchengrößenverteilung bestimmt. Diese Parameter bestimmen in Verbindung mit den gewünschten physikalischen Eigenschaften des Endprodukts die Intensität der Sinterbehandlung des Grünkörpers. Daran bemisst sich die einzuhaltende Porosität der SiO₂-Armierungskörper vor der Sinterbehandlung. Je höher die Sinteraktivität der amorphen SiO₂-Teilchen ist, umso geringer ist die anfänglich Dichte D_{K0} der SiO₂-Armierungskörper vor der Sinter-Behandlung. Als geeigneter Anhaltspunkt hat sich eine Dichte der SiO₂-Armierungskörper vor der Sinterbehandlung im Bereich zwischen 85 bis 95 % der nominalen spezifischen Glasdichte (2,10 und 2,18 g/cm³) erwiesen.

Die SiO₂-Armierungskörper bilden in der SiO₂-Matrix eine eigene, wenn auch im Idealfall visuell kaum erkennbare Phase. Sie können unabhängig von ihrer Dichte als optische Störstellen wirken, wenn sich die Brechungsindizes von Armierungskörper und Matrix voneinander unterscheiden. Ist dies unerwünscht, so bestehen die beiden Phasen (Matrix / Armierungskörper) aus einem möglichst identischen SiO₂-Werkstoff, vorzugsweise mit einem SiO₂-Gehalt von mindestens 99,9 Gew.-%.

Bevorzugt wird opakes Quarzglas erzeugt, das bei Messwellenlängen von 1700 nm und 3200 nm eine direkte spektrale Transmission T_{G} aufweist, wobei Armierungskörper eingesetzt werden, die infolge der Sinter-Behandlung bei den Messwellenlängen eine direkte spektrale Transmission T_{K} erreichen, die von T_{G} um weniger als 0,05 Prozentpunkte, vorzugsweise um weniger als 0,02 Prozentpunkte abweicht. Die Abweichung errechnet sich als Betragswert der Differenz 1 T_{G}-T_{K} | Die Messwellenlängen 1700 und 3200 nm repräsentieren Wellenlängenbereiche, die von ausgeprägten Absorptionsbanden möglichst wenig beeinflusst sind. Die Transmission T_{G} des opaken Quarzglases bezieht sich sowohl auf das reine Matrixmaterial (ohne SiO₂-Armierungskörper) als auch auf das opake Quarzglas, das SiO₂-Armierungskörper enthält. **(OK???s.o.)**

Die gründichten, also noch sinterfähigen SiO₂-Armierungskörper können durch bekannte Formgebungsverfahren, wie etwa durch Granulationsverfahren erzeugt werden. Im Hinblick auf einen möglichst geringen Unterschied in der Zusammensetzung zwischen SiO₂-Matrix und SiO₂-Armierungskörper wird jedoch eine Verfahrensvariante bevorzugt, bei der die Armierungskörper erzeugt werden, indem feinteilige, amorphe SiO₂-Teilchen infolge einer Vorverdichtung zu einem porösen Formkörper verdichtet, und der poröse Formkörper zu den Armierungskörpern zerkleinert wird.

Bei dem zu zerkleinernden porösen Formkörper handelt es sich um einen durch übliche Formgebungsverfahren, wie beispielsweise Pressen, Gießen, Granulieren oder plastische Verformung erzeugten, teilverdichteten Körper. Die daraus durch Zerkleinern erhaltenen SiO₂-Armierungskörper bestehen aus den gleichen amorphen SiO₂-Teilchen, die auch dem Schlicker zwecks Herstellung des Grünkörpers zugeführt werden, nur dass die SiO₂-Armierungskörper größere Aggregate oder Agglomerate der SiO₂-Teilchen darstellen, die vorab anhand einer mechanischen und/oder thermischen Behandlung vorverdichtet worden sind. Im Idealfall entfalten sie ihre festigkeitssteigernde Wirkung nur im nassen und trockenen Grünkörper, wohingegen sie nach der Sinter-Behandlung weder merkliche optische noch mechanische Unterschiede zur porösen Quarzglasmatrix zeigen. Das opake Quarzglas ist daher kein Verbund- oder Kompositwerkstoff im üblichen Sinne, bei dem eine Zusatzkomponente zu einer Veränderung der Eigenschaften des Verbunds beitragen soll.

Die mechanische Vorverdichtung erfolgt beispielsweise durch uniaxiales oder isostatisches Pressen, die thermische Vorverdichtung durch druckfreies oder druckgestütztes Sintern, wie beispielsweise durch Gasdrucksintern. Der vorverdichtete Formkörper und die daraus durch Zerkleinern erzeugten SiO₂-Armierungskörper haben eine Dichte D_{K0}, die geringer ist als die nominale spezifische Glasdichte D_{G}.

Bei einer bevorzugten Verfahrensweise ist vorgesehen, dass die Vorverdichtung eine Vorsinter-Behandlung umfasst, bei der eine maximale Vorsinter-Temperatur eingestellt wird, die im Bereich von 20 bis 100 °C niedriger ist als eine maximale Sintertemperatur bei der Sinter-Behandlung.

Die SiO₂-Armierungskörper unterliegen hierbei einer zweifachen thermischen Verdichtung, nämlich durch die Vorsinter-Behandlung des Formkörpers und durch die eigentliche Sinter-Behandlung des Grünkörpers mit den darin enthaltenen Armierungskörpern. Die Vorsinter-Temperatur ist niedriger als die Sintertemperatur, um zu verhindern, dass die Armierungskörper-Dichte infolge der zweifachen Verdichtung zu weit von der spezifischen Glasdichte und damit einhergehend ihre spektrale Transmission T_{K} von der Transmission T_{G} und von der vorgegebenen visuell erkennbaren Transluzenz der opaken Quarzglas-Matrix abweicht.

Die geometrische Form der Armierungskörper-Partikel ist regelmäßig, bevorzugt aber unregelmäßig. Insbesondere können die SiO₂-Armierungskörper durch Brechen oder Mahlen eines porösen Formkörpers erhalten werden und weisen gegebenenfalls Bruchflächen auf. Die Bruchstücke haben in der Regel keine sphärische Morphologie, sondern eine nicht-sphärische, scherbenartige Morphologie, die im Folgenden als "splittrige Morphologie" bezeichnet wird. Diese ist für ein dichtes, flächiges Zusammenlagern und für eine gegenseitige Verzahnung der SiO₂-Bruchstücke förderlich. Diese flächige Verzahnung an Bruchflächen der SiO₂-Armierungskörper bildet eine Art "Kartenhausstruktur", die eine höhere Dichte des Grünkörpers ermöglicht und die sich auf die Grünfestigkeit positiv auswirkt. Bevorzugt haben mindestens 80 % der SiO₂-Armierungskörper, besonders bevorzugt mindestens 90 % der SiO₂-Armierungskörper mit einer Teilchengröße von mehr als 100 µm eine nicht-sphärische, splittrige Morphologie mit einem Aspektverhältnis von mindestens 2.

Es hat sich bewährt, wenn die SiO₂-Armierungskörper eine mittlere Partikelgröße (D₅₀-Wert) von mindestens 500 µm, bevorzugt mindestens 5000 µm haben Der D₅₀-Wert repräsentiert diejenige Partikelgröße, die von 50% des kumulativen Partikelvolumens nicht erreicht wird (Medianwert).

Dabei hat es sich auch als günstig erweisen, wenn das Größenverhältnis der mittleren Partikelgröße der SiO₂-Armierungskörper und der mittleren Teilchengröße (D₅₀-Wert) der feinteiligen, amorphen SiO₂-Teilchen zwischen 1:5 und 1:500 liegt.

Die Teilchengrößen der amorphen SiO₂-Teilchen liegen typischerweise im Bereich bis maximal 200 µm, vorzugsweise bis maximal 100 µm, wobei SiO₂-Teilchen mit Teilchengrößen im Bereich zwischen 1 µm und 60 µm den größten Volumenanteil ausmachen. Ihre Teilchengrößenverteilung ist typischerweise durch einen D₅₀ -Wert von weniger als 50 µm, vorzugsweise weniger als 40 µm, definiert. Demgegenüber liegen die Partikelgrößen der SiO₂-Armierungskörper bevorzugt im Bereich zwischen 0,1 und 10 mm.

Das Volumenverhältnis der SiO₂-Armierungskörper und der feinteiligen, amorphen SiO₂-Teilchen im Schlicker liegt bevorzugt zwischen 1:3 und 3:1

Die Armierung dient der mechanischen Stabilisierung des Grünkörpers. Die physikalischen Eigenschaften des daraus hergestellten opaken Quarzglases soll die Armierung möglichst nicht beeinträchtigen. Unter diesem Aspekt sollte der Volumenanteil der Armierung so groß wie nötig, aber so gering wie möglich sein. Andererseits ist es gerade der Effekt der Erfindung, dass eine Armierung eingesetzt wird, die den Grünkörper mechanisch stabilisiert und die Schwindung beim Trocknen und Sintern vermindert, die sich aber auf die physikalischen Eigenschaften des opaken Quarzglases und insbesondere dessen Transmission möglichst nicht auswirkt. Unter diesem Aspekt sollte der Volumenanteil der Armierung so groß wie möglich sein. Das Mindest-Volumen an Armierungskörper (obiges Verhältnis 1:3) ergibt sich dadurch, dass es nicht zur Segregation derselben im gegossenen Schlicker kommen soll. Nach oben (obiges Verhältnis 3:1) wird der Volumenanteil der Armierungskörper begrenzt durch das Risiko einer Hohlraumbildung, die zur Poren- beziehungsweise Lunkerbildung führen kann. Abhängig von der Grünkörpergeometrie liegt der Volumenanteil an SiO₂-Armierungskörper somit zwischen 33 und 67 %, bevorzugt zwischen 40% und 60%.

Der nach dem Sintern des Grünkörpers erhaltene Rohling aus opakem Quarzglas ist ein Vollkörper, ein Hohlkörper oder es bildet eine opake Quarzglasschicht auf einem Basiskörper. Er dient zur Herstellung eines wenig rissanfälligen Bauteils aus opakem Quarzglas. Die Opazität zeigt sich darin, dass die direkte spektrale Transmission im Wellenlängenbereich zwischen 200 nm und 2500 nm unterhalb von 2 % liegt. Dementsprechend ergibt sich ein hoher Reflexionsgrad von mehr als 95 % im infraroten Wellenlängenbereich. Die oberflächennahe Schicht des Rohlings kann transparent sein.

In Bezug auf diesen Rohling wird die oben genannte technische Aufgabe ausgehen von einem Rohling der eingangs genannten Gattung erfindungsgemäß dadurch gelöst, dass die SiO₂-Armierungskörper porös sind und eine spezifische Dichte D_{K1} aufweisen, die von der spezifischen Dichte D_{M} der Matrix um weniger als 10% abweicht.

Beim erfindungsgemäßen Rohling sind somit in einer Matrix aus opakem Quarzglas möglichst homogen verteilte Bereiche aus porösem Quarzglas enthalten, die den ursprünglichen SiO₂-Armierungskörpern zuzuordnen sind, deren Porosität sich aber von der der Matrix nicht oder nur unwesentlich unterscheidet. Die Abweichung bezogen auf die Glasdichte D_{M} beträgt maximal +/-10%.

Die Phasenbegrenzungen der ursprünglichen SiO₂-Armierungskörper sind mikroskopisch noch erkennbar; sie wirken aber nicht oder möglichst nicht als optische Störstellen.

Der Rohling wird bevorzugt anhand eines Schlickergießverfahrens gemäß der Erfindung erhalten. Es handelt sich um einen Vollkörper, einen Hohlkörper oder der Rohling bildet eine opake Quarzglasschicht auf einem Basiskörper. Der Rohling dient als Bauteil aus opakem Quarzglas oder er wird durch einfache mechanische oder thermische Nachbearbeitung, wie beispielsweise einer mechanischen Oberflächenglättung, zu einem Bauteil aus opakem Quarzglas weiterverarbeitet.

Vorteilhafte Ausgestaltungen des erfindungsgemäßen Rohlings ergeben sich aus den Unteransprüchen. Soweit in den Unteransprüchen angegebene Ausgestaltungen des Rohlings den in Ansprüchen zum erfindungsgemäßen Verfahren genannten Verfahrensweisen nachgebildet sind, wird zur ergänzenden Erläuterung auf die obigen Ausführungen zu den entsprechenden Verfahrensansprüchen verwiesen.

### Definitionen und Messmethoden

Einzelne Verfahrensschritte und Begriffe der obigen Beschreibung sowie Messmethoden werden im Folgenden ergänzend definiert. Die Definitionen sind Bestandteil der Beschreibung der Erfindung. Bei einem inhaltlichen Widerspruch zwischen einer der folgenden Definitionen und der übrigen Beschreibung ist das in der Beschreibung Gesagte maßgeblich.

### Quarzglas

Unter Quarzglas wird hier hochkieselsäurehaltiges Glas mit einem SiO₂-Anteil von mindestens 90 mol.-% verstanden.

### Schlicker

Der Begriff "Schlicker" wird für eine Suspension aus einer Flüssigkeit und SiO₂-Feststoffteilchen verwendet. Als Flüssigkeit kann Wasser eingesetzt werden, das durch Destillation oder Deionisierung gereinigt ist, um den Gehalt an Verunreinigungen zu minimieren.

### Teilchengröße und Teilchengrößenverteilung

Teilchengröße und Teilchengrößenverteilung der feinteiligen amorphen SiO₂-Teilchen werden anhand der D₅₀-Werte charakterisiert. Diese Werte werden aus Partikelgrößen-Verteilungskurven entnommen, die das kumulative Volumen der SiO₂-Partikel in Abhängigkeit von der Partikelgröße zeigen. Dabei kennzeichnet der D₅₀-Wert diejenige Partikelgröße, die von 50% des kumulativen Volumens der SiO₂-Partikel nicht erreicht wird. Die Partikelgrößenverteilung wird durch Streulicht- und Laserbeugungsspektroskopie nach ISO 13320 ermittelt.

Bei den grobteiligen SiO₂-Armierungskörpern werden Teilchengröße und Teilchengrößenverteilung mikroskopisch ermittelt. Bei nicht sphärischen SiO₂-Armierungskörpern mit einem Aspektverhältnis von mehr als 2 wird die längste Abmessung durch mikroskopische Bildanalyse anhand des so genannten "Feret-Durchmessers" von Partikeln ermittelt, wie definiert in Norm DIN 66141 und ISO-13322-2.

### SplittrigeSiO₂-Armierungskörper und Aspektverhältnis

Beim Zerkleinern eines teilverdichteten porösen SiO₂-Formkörpers werden Bruchstücke des ursprünglichen Formkörpers erzeugt, die Bruchflächen und in der Regel eine splittrige, nicht-sphärische Morphologie mit einem Aspektverhältnis (auch als "Strukturverhältnis" bezeichnet) von mindestens 2 zeigen. Unter dem "Aspektverhältnis" wird das Verhältnis von größter Strukturbreite des Bruchteilchens und seiner Dicke verstanden. Ein Aspektverhältnis von mindestens 2 bedeutet demnach, dass die größte Strukturbreite mindestens zweimal größer ist als seine Dicke.

### Sintern

Mit "Sintern" oder "thermisches Verdichten" wird ein Verfahrensschritt bezeichnet, bei dem ein Grünkörper bei erhöhter Temperatur von mehr als 1100 °C behandelt wird. Das Sintern/Verdichten erfolgt unter Luft, unter Inertgas oder unter Vakuum. Unter Vakuum wird ein absoluter Gasdruck von weniger als 2 mbar verstanden.

### Messung des Porenvolumens

Das "Porenvolumen" eines porösen Materials bezeichnet das von Hohlräumen belegte, freie Volumen innerhalb des Materials. Das Porenvolumen wird beispielsweise mittels eines Porosimeters gemessen, wobei eine nicht benetzende Flüssigkeit (wie beispielsweise Quecksilber) unter Einwirkung eines äußeren Drucks in die Poren eines porösen Materials gegen die entgegenwirkenden Oberflächenspannungskräfte gepresst wird. Die dazu benötigte Kraft ist umgekehrt proportional zur Porengröße und daher kann neben dem Porengesamtvolumen auch die Porengrößenverteilung der Probe ermittelt werden. Die Quecksilberporosimetrie erfasst nur Porengrößen oberhalb von 2 nm (Mesoporen und Makroporen). "Mikroporen" sind Poren mit Porengrößen von weniger als 2 nm. Deren Beitrag zur Porosität und zur spezifischen Oberfläche wird anhand der mittels der V-t-Methode mittels Stickstoffabsorption ermittelt, wobei eine Probe bei unterschiedlichen Drücken und 77 K gehalten wird. Die Methode gleicht der der BET-Methode, wobei der Druckbereich zu höheren Drücken ausgedehnt ist, so dass auch Oberflächen des nicht mikroporösen Teils des Materials erfasst werden.

### Messung der optischen Transmission

Die Transmission wird spektroskopisch als direkte spektrale Transmission im Wellenlängenbereich von 190 bis 4800 nm ermittelt; das heißt: Reflexionsverluste an den Oberflächen der Messprobe werden nicht herausgerechnet. Die durchstrahlte Dicke der Messprobe beträgt 3 mm.

### Ausführungsbeispiel

Nachfolgend wird die Erfindung anhand von Ausführungsbeispielen und einer Zeichnung näher erläutert. Im Einzelnen zeigt
- **Figur 1**: ein Fließdiagramm zur Erläuterung des Verfahrensablaufs bei der Herstellung eines Quarzglaszylinders anhand des erfindungsgemäßen Verfahrens,
- **Figur 2**: ein Fließdiagramm zur Erläuterung der Herstellung von SiO₂-Armierungskörpern zum Einsatz beim Verfahrensablauf von Figur 1,
- **Figur 3**: ein Foto eines Rohlings aus opakem Quarzglas mit optisch inhomogenen Volumenbereichen als Vergleichsbeispiel, und
- **Figur 4**: ein Diagramm mit Transmissionskurven verschiedener Sinterproben.

Nachfolgend wird das erfindungsgemäße Verfahren anhand der Herstellung eines Flansches für einen Quarzglas-Reaktor für die Behandlung von Halbleiterscheiben beispielhaft erläutert.

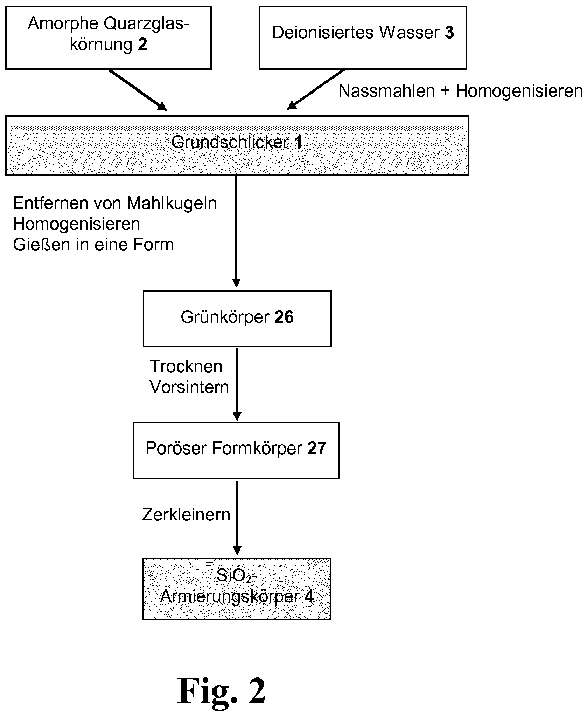

### Herstellung poröser SiO₂-Armierungskörper (Figur 2)

Es wird ein homogener Grundschlicker 1 hergestellt. Für einen Ansatz von 10 kg Grundschlicker (SiO₂-Wasser-Schlicker) werden in einer mit Quarzglas ausgekleideten Trommelmühle mit ca. 20 Liter Volumeninhalt, 8,2 kg einer amorphen Quarzglaskörnung 2, die durch Schmelzen von natürlichem Quarzrohstoff erhalten worden ist, und die Korngrößen im Bereich zwischen 250 µm und 650 µm aufweist, mit 1,8 kg deionisiertem Wasser 3 mit einer Leitfähigkeit von weniger als 3 µS vermischt. Die Quarzglaskörnung 2 wurde vorab in einem Heißchlorierverfahren gereinigt; es wird darauf geachtet, dass der Cristobalitgehalt unter 1 Gew.-% liegt.

Diese Mischung wird mittels Mahlkugeln aus Quarzglas auf einem Rollenbock bei 23 U/min während 3 Tagen soweit vermahlen, dass sich ein homogener Grundschlicker 1 mit einem Feststoffgehalt von 78 % bildet. Im Verlauf des Nassvermahlens wird die Quarzglaskörnung weiter zerkleinert und es kommt infolge des in Lösung gehenden SiO₂ zu einer Absenkung des pH-Werts auf etwa 4.

Anschließend werden aus dem so erhaltenen Grundschlicker 1 die Mahlkugeln entfernt und der Schlicker wird weitere 12 Stunden homogenisiert. Der so erhaltene, homogene Grundschlicker 1 enthält amorphe SiO₂-Teilchen mit einer Teilchengrößenverteilung, die durch einen D₅₀- Wert von etwa 8 µm und durch einen D₉₀-Wert von etwa 40 µm gekennzeichnet ist.

Der Schlicker wird in eine Druckgussform einer kommerziellen Druckgussmaschine gegossen und über eine poröse Kunststoffmembran unter Bildung eines porösen Grünkörpers 26 entwässert. Zum Entfernen von gebundenem Wasser wird der Grünkörper 26 bei etwa 200 °C fünf Tage lang in einem belüfteten Ofen getrocknet und anschließend in einem Sinterofen unter Luft zu einem porösen Formkörper 27 vorgesintert.

Zum Vorsintern wird der Grünkörper 26 in einem Sinterofen unter Luft innerhalb von einer Stunde auf eine vorgegebene maximale Temperatur aufgeheizt und bei dieser Temperatur 2h gehalten.

### Vorversuch

Das Vorsintern des Grünkörpers 26 erfolgte versuchsweise bei verschiedenen Maximal-Temperaturen von 1250, 1300, 1350, 1400 und 1450 °C. Die danach erhaltenen Formkörper 27 sind noch offen porös, wie ein Farbeindringtest zeigt. Sie bestehen aus thermisch verdichteten Agglomeraten der ehemaligen, gemahlenen Quarzglaskörnung.

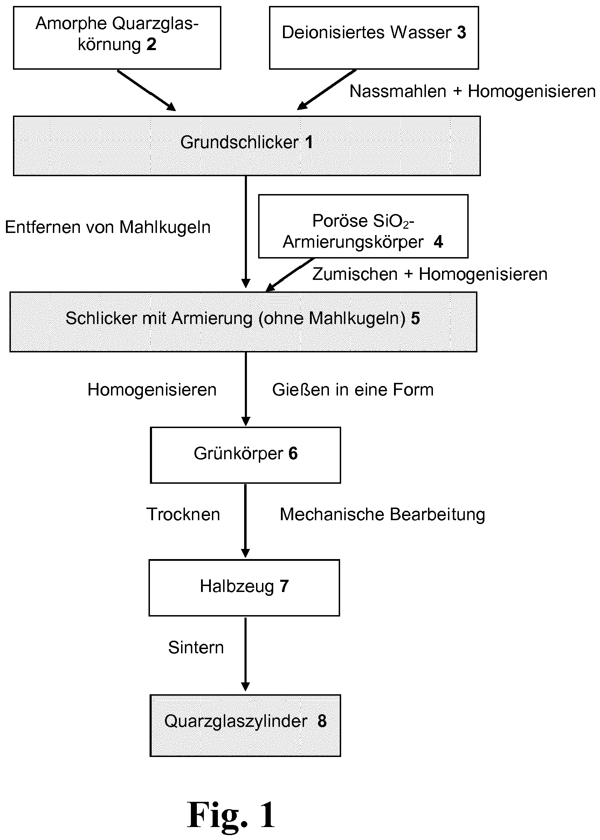

Zur Ermittlung der für das erfindungsgemäße Verfahren optimalen Porosität wurden die Formkörper 27 ein weiteres Mal gesintert, und zwar anhand folgender Standard-Sinter-Behandlung, die der ansonsten üblichen Sinter-Behandlung von Grünkörpern entspricht, wie sie anhand Figur 1 weiter unten noch erläutert wird: In einem Sinterofen unter Luft; Aufheizen innerhalb von einer Stunde auf 1450 °C; Haltedauer bei dieser Temperatur: 1 h.

Aus jedem der doppelt gesinterten Formkörper 27 wurde eine auf 3 mm Dicke geschliffene Sinterprobe für eine Transmissionsmessung erzeugt. Zur Bereitstellung einer Referenzprobe wurde ein Grünkörper 26 nur einmal bei der Standard-Sinter-Behandlung (1450 °C / 5h) verdichtet. Die optischen und mechanischen Eigenschaften dieser Referenzprobe entsprechen denen des Standardmaterials aus opakem Quarzglas. Insbesondere zeigt dieses Material eine vorgegebene, nominale spezifische Dichte von 2,17 g/cm³ und die damit einhergehende geringe optische Transmission.

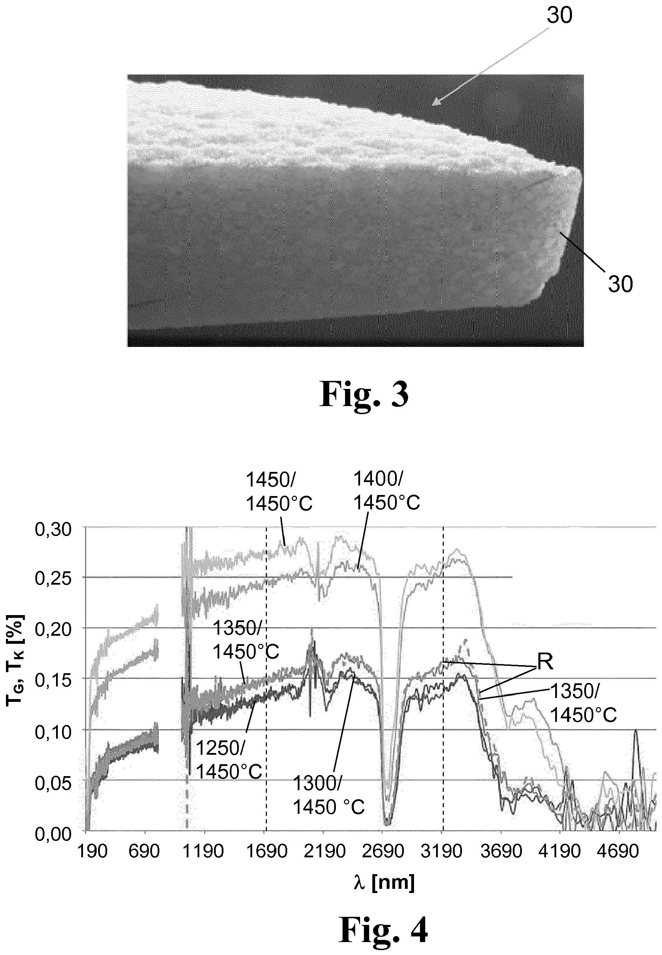

Das Diagramm von Figur 4 zeigt die Ergebnisse der Transmissionsmessungen als gerichtete spektrale Transmission T_{G} beziehungsweise T_{K} (ohne Reflexionsanteile) in % über dem Wellenlängenbereich λ von 190 bis etwa 4800 nm. Die Transmissionskurve der nur einmalig gesinterten Referenzprobe ist mit "R" bezeichnet; sie repräsentiert die Transmission T_{G} der Glasmatrix ohne Zusatz von SiO₂-Armierungskörpern und sie hat die nominale Dichte von 2,16 g/cm³. Bei den Transmissionskurven der doppelt gesinterten Proben ist die Sintertemperatur 1450 °C der Sinter-Behandlung und die jeweilige Vorsinter-Temperatur der Armierungskörper angegeben. Diese Transmissionskurven repräsentieren die spezifische Transmission T_{K} der zweifach gesinterten SiO₂-Armierungskörper.

Demnach zeigt die zweifach gesinterte und bei 1350 °C vorgesinterte Probe einen Transmissionsverlauf (T_{K}) über den gesamten Wellenlängenbereich, der mit dem Transmissionsverlauf (T_{G}) der Referenzprobe R nahezu deckungsgleich ist. Auch die bei 1250°C und 1300 °C vorgesinterten Proben zeigen in ihren Transmissionsverläufen noch große Ähnlichkeiten mit T_{G}, jedoch nicht die bei 1400 °C und 1450 °C gesinterten Proben. Bei diesen Proben zeigt sich eine erhöhte Transluzenz infolge Übersinterung. Repräsentativ für das Maß an Ähnlichkeit im Transmissionsverhalten werden in der folgenden Tabelle 1 die Unterschiede zwischen T_{G} und T_{K} bei den Wellenlängen 1700 nm und 3200 nm betrachtet.

**Tabelle 1: Betrag der Transmissionsdifferenz | T_{G}-T_{K} | in Prozentpunkten**

| **Messwellenlänge [nm]** | **Vorsinter-Temperatur / Sinter-Temperatur [°C]** | | | | |
|---|---|---|---|---|---|
| | **1250/1450** | **1300/1450** | **1350/1450** | **1400/1450** | **1450/1450** |
| **1700** | 0,025 | 0,025 | 0,0 | 0,1 | 0,125 |
| **3200** | 0,03 | 0,03 | 0,01 | 0,09 | 0,1 |

Die kleinste Transmissions-Differenz zwischen SiO₂-Armierungskörper und Matrix ergibt sich bei der Messprobe, bei der die SiO₂-Armierungskörper bei der Temperatur von 1350 °C thermisch vorverdichtet worden sind. Diese erreichen nach der abschließenden Sinter-Behandlung eine direkte spektrale Transmission T_{K}, die bei der Messwellenlänge von 1700 nm um einen kaum messbaren Betrag (etwa Null) und bei der Messwellenlänge von 3200 nm um lediglich 0,01 Prozentpunkte von der spektralen Transmission T_{G} des opaken Quarzglases der Referenzprobe bei diesen Wellenlängen abweicht.

Die vorgesinterten Formkörper 27 wurden zu SiO₂-Armierungskörpern 4 mit Partikelgrößen zwischen 1,5 mm und 4 mm zerkleinert und mit Salzsäure gewaschen.

### Herstellung von opaken Quarzglas-Rohlingen mit einem Zusatz von SiO₂-Armierungskörpern (Figur 1)

Es wird der gleiche homogene Grundschlicker 1 hergestellt, wie oben anhand Figur 2 erläutert. Nach dem Entfernen der Mahlkugeln werden dem Grundschlicker 1 das gleiche Volumen einer trockenen Schüttung von SiO₂-Armierungskörpern 4 mit einer Schüttdichte von 72% zugesetzt. Der mit dem Armierungszuschlag gefüllte Schlicker 5 wird weitere 12 Stunden homogenisiert. Der so erhaltene, homogene Schlicker 5 enthält feinteilige amorphe SiO₂-Teilchen mit einer Teilchengrößenverteilung, die durch einen D₅₀- Wert von etwa 8 µm und durch einen D₉₀-Wert von etwa 40 µm gekennzeichnet ist, und er enthält grobkörnige SiO₂-Armierungs-körper 4 in Form vorgesinterter und zerkleinerter Formkörper (27) mit Teilchengrößen zwischen 1 und 4 mm. Der Volumenanteil der SiO₂-Armierungskörper 4 am gesamten Feststoff liegt bei 50%.

Der Schlicker 5 wird in eine Form mit einem Innendurchmesser von 180 mm und einer Höhe von 300 mm gegossen, wie oben anhand Figur 2 erläutert. Bei Bedarf wird Grundschlicker nachgefüllt, wenn aus der Oberfläche des Gießlings SiO₂-Armierungskörper ohne Benetzung durch Schlicker herausragen.

Der nach dem Entwässern erhaltene zylinderförmige Grünkörper 6 hat einen Durchmesser von 180 mm und eine Höhe von 280 mm. Das sind sehr große Abmessungen für schlickergegossene Körper. Er wird getrocknet, wie oben erläutert, und danach mechanisch bearbeitet und zu einem Halbzeug 7 geschliffen. Das Halbzeug 7 wird in den Sinterofen eingebracht und unter Luft innerhalb von 1 Stunde auf die Heiztemperatur von 1450 °C aufgeheizt und bei dieser Temperatur 2 Stunden lang gehalten. Das Abkühlen erfolgt mit einer Abkühlrampe von 15 °C/min auf eine Ofentemperatur von 500 °C und danach ungeregelt bei geschlossenem Sinterofen.

Die Überprüfung des so erhaltenen Quarzglas-Zylinders 8 auf Risse unter Einsatz eines Ultraschallmessgeräts ergab in keinem Fall einen Befund.

Der Quarzglaszylinder 8 zeichnet sich durch eine Matrix aus opakem Quarzglas aus, in der Bereiche aus opakem, porösem Quarzglas, das den ehemaligen porösen SiO₂-Armierungskörpern zuzuordnen ist, homogen verteilt sind. Figur 3 zeigt einen Splitter 30 aus dem Zylinder, der durch Einsatz eines Armierungszuschlags erzeugt worden ist, der in Figur 4 die Temperaturangabe 1450 °C trägt. In der durchleuchten Kante 31 sind Inhomogenitäten erkennbar, die auf die hoch verdichteten SiO₂-Armierungskörper zurückzuführen sind, deren Dichte nach der Sinter-Behandlung im Bereich der Dichte von undotiertem Quarzglas (2,2 g/cm³) liegt.

Dieses Quarzglas erfüllt sehr hohe Anforderungen an die optische Homogenität nicht. Im Unterscheid dazu sind bei dem Quarzglaszylinder, der durch Einsatz eines Armierungszuschlags erzeugt worden ist, der in Figur 4 die Temperaturangabe 1350 °C trägt, keinerlei Inhomogenitäten erkennbar. Dieses Quarzglas wirkt visuell vollständig homogen weiß. Die Bereiche, die den doppelt thermisch verdichteten SiO₂-Armierungskörpern zuzuordnen sind, haben in diesem Fall eine Dichte im Bereich der nominalen spezifischen Dichte des opaken Quarzglases, also um 2,17 g/cm³.

## Patentansprüche

1. Verfahren zur Herstellung von opakem Quarzglas, indem aus einem feinteilige, amorphe SiO₂-Teilchen und grobteilige SiO₂-Armierungskörper enthaltenden Schlicker ein Grünkörper erzeugt und dieser durch eine Sinter-Behandlung zu einem Rohling aus dem opaken Quarzglas gesintert wird, bei dem Armierungskörper mit einer spezifischen Dichte D_{K1} in einer SiO₂-Matrix mit einer spezifischen Glasdichte D_{M} eingebettet sind , **dadurch gekennzeichnet, dass** sinterfähige Armierungskörper eingesetzt werden, deren spezifische Dichte D_{K0} vor der Sinter-Behandlung geringer ist als die spezifische Glasdichte D_{M}, und die infolge der Sinter-Behandlung die spezifische Dichte D_{K1} erreichen, die von der spezifischen Glasdichte D_{M} um weniger als 10% abweicht.

2. Verfahren nach Anspruch 1, **dadurch gekennzeichnet, dass** Armierungskörper eingesetzt werden, die infolge der Sinter-Behandlung eine spezifische Dichte D_{K1} erreichen, die von der spezifischen Glasdichte D_{M} um weniger als 5% abweicht.

3. Verfahren nach Anspruch 1 oder 2, **dadurch gekennzeichnet, dass** opakes Quarzglas erzeugt wird, das bei Messwellenlänge von 1700 nm und 3200 nm eine direkte spektrale Transmission T_{G} aufweist, und dass Armierungskörper eingesetzt werden, die infolge der Sinter-Behandlung bei der Messwellenlängen eine direkte spektrale Transmission T_{K} erreichen, die von T_{G} um weniger als 0,05 Prozentpunkte, vorzugsweise um weniger als 0,02 Prozentpunkte abweicht.

4. Verfahren nach einem der vorhergehenden Ansprüche, **dadurch gekennzeichnet, dass** die nominale spezifische Glasdichte einen Wert zwischen 2,10 und 2,18 g/cm³, bevorzugt zwischen 2,15 und 2,18 g/cm³ hat, und dass die spezifische Dichte der SiO₂-Armierungskörper vor der Sinterbehandlung zwischen 85 bis 95 % dieses Wertes beträgt.

5. Verfahren nach einem der vorhergehenden Ansprüche, **dadurch gekennzeichnet, dass** die Armierungskörper erzeugt werden, indem feinteilige, amorphe SiO₂-Teilchen infolge einer Vorverdichtung zu einem porösen Formkörper vorverdichtet, und der poröse Formkörper zu den Armierungskörpern zerkleinert wird.

6. Verfahren nach Anspruch 5, **dadurch gekennzeichnet, dass** die Vorverdichtung eine Vorsinter-Behandlung umfasst, bei der eine maximale Vorsinter-Temperatur eingestellt wird, die im Bereich von 20 bis 100 °C niedriger ist als eine maximale Sintertemperatur bei der Sinter-Behandlung.

7. Verfahren nach einem der vorhergehenden Ansprüche, **dadurch gekennzeichnet, dass** die SiO₂-Armierungskörper eine mittlere Partikelgröße (D₅₀-Wert) von mindestens 500 µm, bevorzugt mindestens 5000 µm haben.

8. Verfahren nach Anspruch 7, **dadurch gekennzeichnet, dass** das Größenverhältnis der mittleren Teilchengröße der SiO₂-Armierungskörper und der mittleren Partikelgröße (D₅₀-Wert) der feinteiligen, amorphen SiO₂-Teilchen zwischen 1:5 und 1:500 beträgt.

9. Verfahren nach einem der vorhergehenden Ansprüche, **dadurch gekennzeichnet, dass** das Volumenverhältnis der SiO₂-Armierungskörper und der feinteiligen, amorphen SiO₂-Teilchen im Schlicker zwischen 1:3 und 3:1 beträgt.

10. Rohling aus opakem Quarzglas, bei dem SiO₂-Armierungskörper in einer Matrix aus porösem SiO₂ mit einer spezifischen Glasdichte D_{M} eingebettet sind, **dadurch gekennzeichnet, dass** die SiO₂-Armierungskörper porös sind und eine spezifische Dichte D_{K1} aufweisen, die von der spezifischen Dichte D_{M} der Matrix um weniger als 10% abweicht.

11. Rohling nach Anspruch 10, **dadurch gekennzeichnet, dass** das opake Quarzglas bei Messwellenlängen von 1700 nm und 3200 nm eine direkte spektrale Transmission T_{G} aufweist, und dass die Armierungskörper bei den Messwellenlängen eine direkte spektrale Transmission T_{K} zeigen, die von T_{G} um weniger als 0,05 Prozentpunkte, vorzugsweise um weniger als 0,02 Prozentpunkte abweicht.

12. Rohling nach Anspruch 10 oder 11, **dadurch gekennzeichnet, dass** die SiO₂-Armierungskörper eine mittlere Partikelgröße (D₅₀-Wert) von mindestens 500 µm, bevorzugt von mindestens 5000 µm haben.

13. Rohling nach einem der Ansprüche 10 bis 12, **dadurch gekennzeichnet, dass** das Größenverhältnis der mittleren Partikelgröße der SiO₂-Armierungskörper und der mittleren Teilchengröße (D₅₀-Wert) der feinteiligen, amorphen SiO₂-Teilchen zwischen 1:5 und 1:500 beträgt.

14. Rohling nach einem der Ansprüche 10 bis 13, **dadurch gekennzeichnet, dass** das Volumenverhältnis der SiO₂-Armierungskörper und der feinteiligen, amorphen SiO₂-Teilchen zwischen 1:3 und 3:1 beträgt.
